# FASCICULE DE BREVET EUROPEEN

(11) **EP 3 635 052 B1**
(45) Date de publication et mention de la délivrance du brevet: **17.11.2021**
(21) Numéro de dépôt: 18737663.7
(22) Date de dépôt: 06.06.2018
(51) Int. Cl.: C08L 23/08, C08F 210/02, C08F 8/42, C08K 3/36

(54) **COPOLYMERE FONCTIONNEL D'UN 1,3-DIENE ET D'UNE OLEFINE**
FUNKTIONELLES COPOLYMER AUS 1,3-DIEN UND EINEM OLEFIN
FUNCTIONAL COPOLYMER CONSISTING OF A 1,3-DIENE AND AN OLEFINE

(30) Priorité: 08.06.2017 FR 1755108
(43) Date de publication de la demande: 15.04.2020
(73) Titulaire: Compagnie Générale des Etablissements Michelin, 63000 Clermont-Ferrand (FR)
(72) Inventeur: THUILLIEZ, Julien, 63040 Clermont-Ferrand Cedex 9 (FR); LAFAQUIERE, Vincent, 63040 Clermont-Ferrand Cedex 9 (FR); PEHLIVAN, Leyla, 63040 Clermont-Ferrand Cedex 9 (FR); MACQUERON, Benoît, 75016 Paris (FR); BOISSON, Christophe, 01390 Tramoyes (FR); D'AGOSTO, Franck, 69740 Genas (FR)
(74) Mandataire: Gandon-Pain, Sylvie
(86) Numéro de dépôt international: PCT/FR2018/051306
(87) Numéro de publication internationale: WO 2018/224775

(56) Documents cités:
- FR-A1- 2 893 028
- FR-A1- 2 893 029
- FR-A1- 3 044 241

## Description

La présente invention concerne des copolymères de diène conjugué et de monooléfine qui portent en extrémité de chaîne une fonction alcoxysilyle ou silanol, ainsi que leur procédé de synthèse.

Il est toujours d'intérêt d'avoir à disposition de nouveaux polymères pour élargir la gamme de matériaux déjà disponibles et améliorer les propriétés des matériaux déjà existants. Parmi les voies d'accès à des nouveaux polymères, on peut citer la modification de polymères.

La modification pour apporter une fonction alcoxysilyle ou silanol à une extrémité de la chaîne d'un polymère est largement décrite pour les polymères synthétisés par polymérisation anionique. La modification des extrémités des chaînes polymères produites par polymérisation anionique repose sur le caractère vivant des chaînes polymères, le caractère vivant se traduisant par l'absence de réaction de transfert et de réaction de terminaison pendant la réaction de polymérisation. La polymérisation vivante se caractérise aussi par le fait qu'une seule chaîne polymère est produite par mole d'amorceur ou par métal. La modification en extrémité de chaîne d'un polymère par une fonction alcoxysilane ou silanol est beaucoup moins décrite pour les polymères synthétisés par polymérisation catalytique au moyen d'un système catalytique hétérogène de type Ziegler-Natta. A titre d'exemple, on peut citer le document WO 2001034658 qui décrit la fonctionnalisation d'un polybutadiène à fort taux de liaison 1,4-cis préparé par une catalyse de coordination à partir d'un système catalytique comprenant un carboxylate de néodyme.

La polymérisation au moyen d'un système catalytique de coordination comprenant un métallocène permet d'accéder à des copolymères de diène conjugué et de monooléfine telle que l'éthylène ou une α-monooléfine. Mais cette polymérisation procède d'une chimie différente de la polymérisation anionique et de la polymérisation par catalyse Ziegler Natta. Une première différence porte sur le système catalytique, par exemple décrit dans les documents EP 1092 731 B1, WO 2004035639 et EP 1 954 706 B1 qui est typiquement composé d'un métallocène et d'un co-catalyseur, un organomagnésien. Une deuxième différence porte sur les réactions mises en jeu qui comprennent de nombreuses réactions de transfert entre le métal du métallocène et le magnésium du co-catalyseur et qui permettent aussi la production d'un grand nombre de chaînes copolymères par métal de métallocène. Une troisième différence porte sur les chaînes polymères produites qui comportent à la fois des unités insaturées telles que des unités diéniques, et des unités saturées telles que des unités éthylène ou 1-alcène. Une autre différence porte sur la structure chimique de l'extrémité de chaîne à modifier, structure qui résulte du mécanisme très spécifique de polymérisation. On peut se référer par exemple au document ACS Catalysis, 2016, Volume 6, Issue 2, pages 1028-1036. En raison de la spécificité des espèces et des réactions mises en jeu dans la synthèse de ces copolymères, il n'existe pas à ce jour de procédé permettant la modification de ces copolymères en extrémité de chaîne et par suite une diminution d'hystérèse de compositions de caoutchouc renforcées de silice et contenant ces copolymères.

Les copolymères d'éthylène et de 1,3-butadiène en raison de leur microstructure présentent des propriétés différentes des élastomères polydiènes ou des copolymères de 1,3-diène et de styrène synthétisés par polymérisation anionique ou par polymérisation Ziegler Natta. Néanmoins, certains de ces copolymères diéniques riches en unités éthylène sont rigides et confèrent aux compositions de caoutchouc une rigidité qui peut s'avérer trop élevée pour certaines applications, par exemple en pneumatique. Il y a donc intérêt à produire de nouveaux copolymères qui confèrent aussi une rigidité moindre aux compositions de caoutchouc.

Le but de la présente invention est de proposer un procédé de synthèse d'un polymère qui permet de résoudre les problèmes mentionnés. Le but de la présente invention est aussi de proposer un polymère qui permet de résoudre les problèmes exposés.

Ainsi un premier objet de l'invention est un copolymère d'un 1,3-diène et d'une oléfine choisie dans le groupe constitué par les α-monooléfines, l'éthylène et leurs mélanges, lequel copolymère porte en une de ses extrémités de chaîne une fonction alcoxysilyle ou silanol, groupe fonctionnel F¹, à condition que le copolymère soit différent d'un copolymère d'un 1,3-diène et d'un monomère vinylaromatique.

L'invention a également pour objet un procédé pour synthétiser le copolymère conforme à l'invention qui comprend les étapes suivantes :
a) la copolymérisation d'un mélange monomère contenant le 1,3-diène et l'oléfine en présence d'un système catalytique comprenant un organomagnésien et un métallocène comportant le motif de formule (I-1) ou (I-2)

   P(Cp¹)(Cp²)Met (I-1)

   (Cp¹)(Cp²)Met (I-2)

   Met étant un atome de métal du groupe 4 ou un atome de métal de terre rare,
   P étant un groupe pontant les deux groupes Cp¹ et Cp², et comprenant au moins un atome de silicium ou de carbone,
   Cp¹ et Cp², identiques ou différents, étant choisis dans le groupe constitué par les groupes cyclopentadiényles, les groupes indényles et les groupes fluorényles, les groupes pouvant être substitués ou non,
b) la réaction d'un agent de fonctionnalisation, composé de formule (II), avec le copolymère obtenu à l'étape a),

   Si(Fc¹)_{4-g} (RC²)_{g} (II)

   les symboles Fc¹, identiques ou différents, représentant un groupe alcoxy ou un halogène,
   les symboles Rc², identiques ou différents, représentant un atome d'hydrogène, une chaîne hydrocarbonée ou une chaîne hydrocarbonée substituée par une fonction chimique Fc²,
   g étant un nombre entier allant de 0 à 2,
c) le cas échéant une réaction d'hydrolyse.

### I. DESCRIPTION DETAILLEE DE L'INVENTION

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les monomères.

Le copolymère conforme à l'invention a pour caractéristique essentielle d'être un copolymère d'un 1,3-diène et d'une oléfine choisie dans le groupe constitué par les α-monooléfines, l'éthylène et leurs mélanges. Il a aussi pour caractéristique essentielle d'être différent d'un copolymère d'un 1,3-diène et d'un monomère vinylaromatique, c'est-à-dire il est différent d'un copolymère dont les unités monomères sont exclusivement des unités 1,3-diène et des unités monomère vinylaromatique. Autrement dit, si à la fois des unités 1,3-diène et des unités monomère vinylaromatique entrent dans la composition du copolymère, elles ne sont pas les seules unités constitutives du copolymère conforme à l'invention. On entend par monomère vinylaromatique une ou plusieurs α-monooléfines de formule CH₂=CH-Ar dans laquelle Ar représente un aryle, tel qu'un phényle substitué ou non substitué. On entend par unité monomère vinylaromatique les unités qui résultent de la polymérisation du monomère vinylaromatique.

Par définition, le pourcentage molaire respectif de 1,3-diène et d'oléfine introduits sous forme polymérisée dans la chaîne copolymère est supérieur à 0.

De façon conventionnelle, les unités monomères 1,3-diène désignent les unités résultant de l'insertion du 1,3-diène dans la chaîne copolymère par une insertion 1,4 ou 2,1. On entend par « un » 1,3-diène un ou plusieurs 1,3-diènes. Dans le cas de plusieurs 1,3-diènes, les unités monomères 1,3-diène désignent les unités monomères résultant de l'insertion de chacun des 1,3-diènes.

De façon conventionnelle, les unités monomères oléfine désignent les unités résultant de l'insertion de l'oléfine dans la chaîne copolymère par une insertion primaire (1,2) ou secondaire (2,1). Dans le cas de plusieurs oléfines, les unités monomères oléfine désignent les unités monomères résultant de l'insertion de chacune des oléfines. L'oléfine est de préférence l'éthylène ou un mélange d'une α-monooléfine et d'éthylène. On entend par « une » α-monooléfine une ou plusieurs α-monooléfines.

A titre de 1,3-diène, conviennent tout particulièrement le 1,3-butadiène, l'isoprène ou leur mélange. De préférence, le 1,3-diène est le 1,3-butadiène.

A titre d'a-monooléfine, conviennent les α-monooléfines aliphatiques ou aromatiques. Les α-monooléfines aliphatiques ont de préférence 3 à 18 atomes de carbone telles que le propène, le 1-butène, le 1-hexène, le 1-octène, le 1-hexadécène ou leurs mélanges. Les α-monooléfines aromatiques sont de préférence les monoléfines substitués en alpha de la double liaison par un groupe phényle, substitué ou non, telles que le styrène, les styrènes substitués par un ou plusieurs groupes alkyles en para, méta ou ortho ou leurs mélanges.

Selon un mode de réalisation de l'invention, les unités monomères 1,3-diène représentent au moins 35%, préférentiellement plus de 60% en mole des unités monomères du copolymère. Les unités monomères du copolymère désignent l'ensemble des unités résultant de l'insertion des monomères dans la chaîne copolymère.

Selon un autre mode de réalisation de l'invention, les unités monomères 1,3-diène représentent moins de 35% en mole des unités monomères du copolymère.

Selon un mode de réalisation particulier de l'invention, les unités éthylène représentent plus de 50%, préférentiellement plus de 65% en mole des unités monomères du copolymère.

Selon un mode de réalisation préférentiel de l'invention, les unités monomères 1,3-diène contiennent plus de 80% en mole de motif résultant d'une insertion 1,4-trans du monomère 1,3-diène dans la chaîne copolymère. Autrement dit, selon ce mode de réalisation préférentiel, les unités monomères 1,3-diène sous la configuration 1,4-trans représentent plus de 80% en mole des unités monomères 1,3-diène.

Selon l'un quelconque des modes de réalisation de l'invention, le copolymère contient de préférence moins de 5% en mole de motifs choisis parmi les motifs résultant d'une insertion 2,1 du monomère 1,3-diène et les motifs cycliques hydrocarbonés aliphatiques à 5 ou 6 atomes de carbone.

Selon un mode de réalisation avantageux de l'invention, le copolymère conforme à l'invention est un copolymère de 1,3-butadiène et d'éthylène ou un terpolymère de 1,3-butadiène, d'éthylène et d'une α-monooléfine.

Le copolymère conforme à l'invention a aussi pour autre caractéristique essentielle de porter en une de ses extrémités de chaîne une fonction alcoxysilane ou une fonction silanol. Dans la présente demande, la fonction alcoxysilane ou silanol portée en une des extrémités est désignée dans la présente demande par l'appellation le groupe fonctionnel F¹.

Selon un mode de réalisation de l'invention, le groupe fonctionnel F¹ est attaché directement par une liaison covalente à l'unité terminale du copolymère, ce qui revient à dire que l'atome de silicium de la fonction est lié directement de façon covalente à un atome de carbone de l'unité terminale du copolymère. Par unité terminale, on entend la dernière unité insérée dans la chaine copolymère par copolymérisation, unité qui est précédée de l'unité pénultième, elle-même précédée de l'unité antepénultième.

Selon une première variante de l'invention, le groupe fonctionnel F¹ est de formule (II-a)

Si(OR¹)_{3-f}(R²)_{f} (II-a)

les symboles R¹, identiques ou différents, représentant un alkyle,
les symboles R², identiques ou différents, représentant un atome d'hydrogène, une chaîne hydrocarbonée ou une chaîne hydrocarbonée substituée par une fonction chimique F²,
f étant un nombre entier allant de 0 à 2.

Dans la formule (II-a), les symboles R¹ sont préférentiellement un alkyle ayant au plus 6 atomes de carbone, plus préférentiellement un méthyle ou un éthyle, encore plus préférentiellement un méthyle.
Si 3-f est supérieur à 1, les symboles R¹ sont avantageusement identiques, en particulier méthyle ou éthyle, plus particulièrement méthyle.

Selon une deuxième variante de l'invention, le groupe fonctionnel F¹ est de formule (II-b)

Si(OH)(R²)₂, (II-b)

les symboles R², identiques ou différents, représentant un atome d'hydrogène, une chaîne hydrocarbonée ou une chaîne hydrocarbonée substituée par une fonction chimique F².

Parmi les chaînes hydrocarbonées représentée par les symboles R² dans les formules (II-a)et (II-b), on peut citer les alkyles, notamment ceux ayant 1 à 6 atomes de carbone, en particulier méthyle ou éthyle, de préférence méthyle.

Parmi les chaînes hydrocarbonées substituées par une fonction chimique F² représentée par les symboles R² dans les formules (II-a) et (II-b), on peut citer les chaînes alcanediyles, notamment celles comportant au plus 6 atomes de carbone, tout particulièrement le groupe 1,3-propanediyle, le groupe alcanediyle portant un substituant, la fonction chimique F², autrement dit une valence de la chaîne alcanediyle pour la fonction F², l'autre valence pour l'atome de silicium de la fonction silanol ou alcoxysilane.

Dans les formules (II-a) et (II-b), on entend par fonction chimique F² un groupe qui est différent d'un groupe hydrocarboné saturé et qui peut participer à des réactions chimiques. Parmi les fonctions chimiques qui peuvent convenir, on peut citer la fonction éther, la fonction thioéther, la fonction amine primaire, secondaire ou tertiaire, la fonction thiol, la fonction silyle. Les fonctions amine primaire ou secondaire ou thiol peuvent être protégées ou ne pas être protégées. Le groupe protecteur des fonctions amine et thiol est par exemple un groupe silyle, en particulier triméthylsilyle ou terbutyldiméthylsilyle. De préférence, la fonction chimique F² est une fonction amine primaire, secondaire, tertiaire ou une fonction thiol, la fonction amine primaire, secondaire ou thiol étant protégée par un groupe protecteur ou non protégée.

Dans les formules (II-a) et (II-b), les symboles R², identiques ou différents, représentent de préférence un alkyle ayant au plus 6 atomes de carbone ou une chaîne alcanediyle ayant au plus 6 atomes de carbone et substituée par une fonction chimique F².

A titre de groupe fonctionnel F¹, on peut citer les groupes diméthoxyméthylsilyle, diméthoxyéthylsilyle, diéthoxyméthysilyle, diéthoxyéthysilyle, 3-(N,N-diméthylamino)-propyldiméthoxysilyle, 3-(N,N-diméthylamino)propyldiéthoxysilyle, 3-aminopropyldiméthoxysilyle, 3-aminopropyldiéthoxysilyle, 3-thiopropyldiméthoxysilyle, 3-thiopropyldiéthoxysilyle, méthoxydiméthylsilyle, méthoxydiéthylsilyle, éthoxydiméthysilyle, éthoxydiéthysilyle, 3-(N,N-diméthylamino)propylméthoxyméthylsilyle, 3-(N,N-diméthyl-amino)propylméthoxyéthylsilyle, 3-(N,N-diméthylamino)propyléthoxyméthylsilyle, 3-(N,N-diméthylamino)propyléthoxyéthylsilyle, 3-aminopropylméthoxyméthylsilyle, 3-aminopropyl-méthoxyéthylsilyle, 3-aminopropyléthoxyméthylsilyle, 3-aminopropyléthoxyéthylsilyle, 3-thiopropylméthoxyméthylsilyle, 3-thiopropyléthoxyméthylsilyle, 3-thiopropylméthoxyéthyl-silyle, 3-thiopropyléthoxyéthylsilyle.

A titre de groupe fonctionnel F¹ , on peut aussi citer la forme silanol des groupes fonctionnels précédemment cités qui contiennent une et une seule *(en anglais* « one ») fonction éthoxy ou méthoxy, la forme silanol pouvant être obtenue par hydrolyse de la fonction éthoxy ou méthoxy. A ce titre conviennent les groupes diméthylsilanol, diéthylsilanol, 3-(N,N-diméthylamino)propylméthylsilanol, 3-(N,N-diméthylamino)propyl-éthylsilanol, 3-aminopropylméthylsilanol, 3-aminopropyléthylsilanol, 3-thiopropyléthyl-silanol, 3-thiopropylméthylsilanol.

A titre de groupe fonctionnel F¹ , on peut également citer les groupes fonctionnels qu'ils soient sous la forme alcoxy ou silanol, qui ont été précédemment cités et qui comportent une fonction amine ou thiol sous une forme protégée par un groupe silyle, en particulier triméthylsilyle ou terbutyldiméthylsilyle.

Selon un mode de réalisation très préférentiel de l'invention, le groupe fonctionnel F¹ est de formule (II-a) dans laquelle f est égal à 1. Selon ce mode de réalisation très préférentiel, conviennent tout particulièrement les groupes pour lesquels R¹ est un méthyle ou un éthyle, comme par exemple les groupes diméthoxyméthylsilyle, diméthoxyéthylsilyle, diéthoxyméthysilyle, diéthoxyéthysilyle, 3-(N,N-diméthylamino)propyldiméthoxysilyle, 3-(N,N-diméthylamino)propyldiéthoxysilyle, 3-aminopropyldiméthoxysilyle, 3-aminopropyl-diéthoxysilyle, 3-thiopropyldiméthoxysilyle, 3-thiopropyldiéthoxysilyle. Conviennent aussi les formes protégées de la fonction amine ou thiol des 4 derniers groupes fonctionnels cités dans la liste précédente par un groupe silyle, en particulier triméthylsilyle ou terbutyldiméthylsilyle.

Selon un mode de réalisation encore plus préférentiel de l'invention, le groupe fonctionnel F¹ est de formule (II-a)dans laquelle f vaut 1 et R¹ est un méthyle. Selon ce mode de réalisation encore plus préférentiel, conviennent tout particulièrement les groupes diméthoxyméthylsilyle, diméthoxyéthylsilyle, 3-(N,N-diméthylamino)propyldiméthoxysilyle, 3-aminopropyldiméthoxysilyle, 3-thiopropyldiméthoxysilyle, ainsi que les formes protégées de la fonction amine ou thiol du 3-aminopropyldiméthoxysilyle ou 3-thiopropyldiméthoxysilyle par un triméthylsilyle ou un terbutyldiméthylsilyle.

Selon l'un quelconque des modes de réalisation de l'invention, le copolymère présente de préférence une masse molaire moyenne en nombre (Mn) d'au moins 5000 g/mol, de manière plus préférentielle d'au moins 60 000 g/mol, valeur minimum particulièrement avantageuse pour un usage du copolymère en tant qu'élastomère par exemple dans une composition de caoutchouc pour pneumatique. Généralement, sa masse molaire moyenne en nombre n'excède pas 1 500 000 g/mol; au-delà de cette valeur la viscosité du copolymère peut rendre l'utilisation du copolymère délicate. Il présente de préférence une dispersité *Ð* , égal à Mw/Mn (Mw étant la masse molaire moyenne en poids) comprise entre 1,10 et 3,00. Les valeurs de Mn, Mw et D sont mesurées selon la méthode décrite dans le paragraphe II.1.

Le copolymère conforme à l'invention peut être préparé par le procédé décrit ci-après.

Le procédé a pour caractéristique essentielle de comprendre les étapes (a) et (b), et le cas échéant l'étape (c) suivantes :
a) la copolymérisation d'un mélange monomère contenant le 1,3-diène et l'oléfine en présence d'un système catalytique comprenant un organomagnésien et un métallocène comportant le motif de formule (I-1) ou (I-2)

   P(Cp¹)(Cp²)Met (I-1)

   (Cp¹)(Cp²)Met (I-2)

   Met étant un atome de métal du groupe 4, ou un atome de métal de terre rare,
   P étant un groupe pontant les deux groupes Cp¹ et Cp², et comprenant un atome de silicium ou de carbone,
   Cp¹ et Cp², identiques ou différents, étant choisis dans le groupe constitué par les groupes cyclopentadiényles, les groupes indényles et les groupes fluorényles, les groupes pouvant être substitués ou non.
b) la réaction d'un agent de fonctionnalisation avec le copolymère obtenu à l'étape a),
c) le cas échéant une réaction d'hydrolyse.

L'étape a) est une copolymérisation d'un mélange monomère de 1,3-diène et d'oléfine. La copolymérisation peut être conduite conformément aux demandes de brevet EP 1 092 731, WO 2004035639 et WO 2007054224 en utilisant un système catalytique composé d'un métallocène et d'un organomagnésien utilisés à titre de catalyseur et de co-catalyseur respectivement.

L'homme du métier adapte les conditions de polymérisation décrites dans ces documents de manière à atteindre la microstructure et la macrostructure souhaitées de la chaîne copolymère. Selon l'un quelconque des modes de réalisation de l'invention, le rapport molaire de l'organomagnésien sur le métal Met constituant le métallocène est de préférence compris dans un domaine allant de 1 à 100, de manière plus préférentielle est supérieur ou égal à 1 et inférieur à 10. La plage de valeurs allant de 1 à moins de 10 est notamment plus favorable pour l'obtention de copolymères de masses molaires élevées.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la copolymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

L'organomagnésien est un composé qui présente au moins une liaison C-Mg. A titre de composés organomagnésiens on peut citer les diorganomagnésiens, en particulier les dialkylmagnésiens et les halogénures d'organomagnésien, en particulier les halogénures d'alkylmagnésien. Le composé diorganomagnésien présente deux liaisons C-Mg, en l'espèce C-Mg-C ; l'halogénure d'organomagnésien présente une liaison C-Mg.

Selon un mode de réalisation particulièrement préférentiel de l'invention, l'organomagnésien comporte un groupe alkyle lié à l'atome de métal Mg. A ce titre conviennent particulièrement les alkylmagnésiens (également appelés alkylmagnésium), tout particulièrement les dialkylmagnésiens (également appelés dialkylmagnésium) ou les halogénures d'alkylmagnésien (également appelés halogénures d'alkylmagnésium), comme par exemple le butyloctylmagnésium, le butyléthylmagnésium et le chlorure de butylmagnésium. De manière plus préférentielle, l'organomagnésien est un diorganomagnésien. L'organomagnésien est avantageusement le butyloctylmagnésium.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

Dans la présente demande, dans le cas du groupe cyclopentadiényle, la position 2 (ou 5) désigne la position de l'atome de carbone qui est adjacent à l'atome de carbone auquel est attaché le pont P, qu'il soit P¹ ou P², comme cela est représenté dans le schéma ci-après.

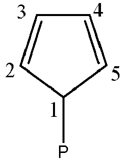

A titre de groupe cyclopentadiényle substitué en position 2 & 5, on peut citer plus particulièrement le groupe tétraméthylcyclopentadiényle.

Dans le cas du groupe indényle, la position 2 désigne la position de l'atome de carbone qui est adjacent à l'atome de carbone auquel est attaché le pont P, qu'il soit P¹ ou P², comme cela est représenté dans le schéma ci-après.

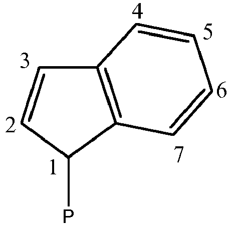

A titre de groupes indényles substitués en position 2, on peut citer plus particulièrement le 2-méthylindényle, le 2-phénylindényle.

A titre de groupes fluorényles substitués, on peut citer plus particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

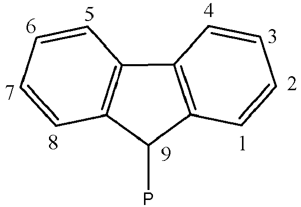

Avantageusement, dans la formule (I-1) ou (I-2), Cp¹ représente un groupe cyclopentadiényle substitué ou non susbstitué et Cp² représente un groupe fluorényle substitué ou non substitué, de préférence Cp¹ représente un groupe cyclopentadiényle non substitué et Cp² représente un groupe fluorényle non substitué.

Le symbole Met représente de préférence un atome de métal de terre rare. On rappelle que les terres rares sont des métaux et désignent les éléments scandium, yttrium et les lanthanides dont le numéro atomique varie de 57 à 71.

Dans la formule (I-1), l'atome Met est relié à une molécule de ligand constitué des deux groupes Cp¹ et Cp² reliés entre eux par le pont P¹. De préférence, le symbole P¹, désigné sous le terme de pont, répond à la formule MR³R⁴, M représentant un atome de silicium ou de carbone, de préférence un atome de silicium, R³ et R⁴, identiques ou différents, représentant un groupe alkyle comprenant de 1 à 20 atomes de carbone. De manière plus préférentielle, le pont P¹ est de formule SiR³R⁴, R³ et R⁴, étant tels que définis précédemment. De manière encore plus préférentielle, P¹ répond à la formule SiMe₂.

Selon un mode de réalisation préférentiel de l'invention, le métallocène est de formule (I-1a) ou (I-2a)

{P(Cp¹)(Cp²)Met-G}_{b} (I-1a)

(Cp¹)(Cp²)MetG (I-2a)

dans lesquelles
- Met représente un atome de métal de terre rare,
- le symbole G désignant un halogène X choisi dans le groupe constitué par le chlore, le fluor, le brome et l'iode, ou un groupe comprenant le motif borohydrure BH₄,
- Cp¹, Cp² et P étant tels que définis précédemment, y compris selon les variantes préférentielles,
- b étant égal à 1 ou 2.

Avantageusement, dans la formule (I-1a) ou (I-2a), Cp¹ représente un groupe cyclopentadiényle substitué ou non susbstitué et Cp² représente un groupe fluorényle substitué ou non substitué, de préférence Cp¹ représente un groupe cyclopentadiényle non substitué et Cp² représente un groupe fluorényle non substitué.

Que le métallocène soit de formule (I-1), (I-2), (I-1a) ou (I-2a), le symbole Met représente de préférence un atome de lanthanide (Ln) dont le numéro atomique va de 57 à 71, de manière plus préférentielle un atome de néodyme (Nd).

Le métallocène peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans les demandes WO 2007054223 et WO 2007054224. Le métallocène peut être préparé de façon traditionnelle par un procédé analogue à celui décrit dans les documents EP 1 092 731, WO 2007054223 et WO 2007054224, notamment par réaction dans des conditions inertes et anhydres du sel d'un métal alcalin du ligand avec un sel de terre rare comme un halogénure ou un borohydrure de terre rare, ou un sel d'un métal du groupe 4 dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Selon l'un quelconque des modes de réalisation décrits, le métallocène est de préférence un métallocène borohydrure de lanthanide ou un métallocène halogénure de lanthanide, notamment un métallocène chlorure de lanthanide.

Selon un mode de réalisation particulièrement préférentiel de l'invention, le symbole G désigne le chlore ou le groupe de formule (III)

(BH₄)_{(1+c)-}L_{c}-Nₓ (III)

dans laquelle
- L représente un métal alcalin choisi dans le groupe constitué par le lithium, le sodium et le potassium
- N représente une molécule d'un éther,
- x, nombre entier ou non, est égal ou supérieur à 0,
- c, nombre entier, est égal ou supérieur à 0.

Comme éther convient tout éther qui a le pouvoir de complexer le métal alcalin, notamment le diéthyléther et le tétrahydrofuranne.

Comme métallocène utile à l'invention, on peut citer les métallocènes de formule (III-3a), (III-3b) ou (III-3c), de préférence les métallocènes de formule (III-3b) ou (III-3c).

[Me₂Si(C₅H₄)(C₁₃H₈)NdCl] (III-3a)

[Me₂Si(C₅H₄)(C₁₃H₈)Nd(BH₄)₂Li(THF)] (III-3b)

[Me₂Si(C₅H₄)(C₁₃H₈)Nd(BH₄)(THF)] (III-3c)

L'étape b) consiste à faire réagir un agent de fonctionnalisation avec le copolymère obtenu à l'étape a) pour fonctionnaliser en extrémité de chaîne le copolymère. L'agent de fonctionnalisation est un composé de formule (II),

Si(Fc¹)_{4-g} (RC²)_{g} (II)

les symboles Fc¹, identiques ou différents, représentant un groupe alcoxy ou un atome d'halogène,
les symboles R_{C}², identiques ou différents, représentant un atome d'hydrogène, une chaîne hydrocarbonée ou une chaîne hydrocarbonée substituée par une fonction chimique Fc²,
g étant un nombre entier allant de 0 à 2.

Lorsque le symbole Fc¹ représente un groupe alcoxy, le groupe alcoxy est de préférence méthoxy ou éthoxy. Lorsque le symbole Fc¹ représente un atome d'halogène, l'atome d'halogène est de préférence le chlore.

Selon un mode de réalisation préférentiel de l'invention, au moins un des symboles Fc¹ représente un groupe alcoxy, en particulier méthoxy ou éthoxy. Avantageusement, l'agent de fonctionnalisation est alors de formule (II-1)

MeOSi(Fc¹)_{3-g} (RC²)_{g} (II-1)

les symboles Fc¹, Rc² et g étant tels que définis dans la formule (II).

Selon un mode de réalisation plus préférentiel, au moins deux des symboles Fc¹ représentent un groupe alcoxy, en particulier méthoxy ou éthoxy. Avantageusement, l'agent de fonctionnalisation est alors de formule (II-2)

(MeO)₂Si(Fc¹)_{2-g} (RC²)_{g} (II-2)

les symboles Fc¹, Rc² et g étant tels que définis dans la formule (II).

Selon un mode de réalisation encore plus préférentiel, au moins trois des symboles Fc¹ représentent un groupe alcoxy, en particulier méthoxy ou éthoxy. Avantageusement, l'agent de fonctionnalisation est alors de formule (II-3)

(MeO)₃Si(Fc¹)_{1-g} (RC²)_{g} (11-3)

les symboles Fc¹, Rc² étant tels que définis dans la formule (II) et g nombre entier allant de 0 à 1.

Selon un mode de réalisation encore plus avantageux, l'agent de fonctionnalisation est de formule (II-4)

(MeO)₃SiRc² (II-4)

Rc² étant tel que défini dans la formule (II).

Parmi les chaînes hydrocarbonées représentée par les symboles Rc² dans les formules (II), (II-1), (II-2), (II-3)et (II-4), on peut citer les alkyles, de préférence les alkyles ayant au plus 6 atomes de carbone, de manière plus préférentielle méthyle ou éthyle, mieux méthyle.

Parmi les chaînes hydrocarbonées substituées par une fonction chimique Fc² qui sont représentée par les symboles Rc² dans les formules (II), (II-1), (II-2), (II-3)et (II-4), on peut citer les chaînes alcanediyles, de préférence celles comportant au plus 6 atomes de carbone, de manière plus préférentielle le groupe 1,3-propanediyle, le groupe alcanediyle portant un substituant, la fonction chimique Fc², autrement dit, une valence de la chaîne alcanediyle pour la fonction Fc², l'autre valence pour l'atome de silicium de la fonction méthoxysilane.

Dans les formules (II), (II-1), (II-2), (II-3) et (II-4), on entend par fonction chimique un groupe qui est différent d'un groupe hydrocarboné saturé et qui peut participer à des réactions chimiques. L'homme du métier comprend que la fonction chimique Fc² est un groupe chimiquement inerte vis-à-vis des espèces chimiques présentes dans le milieu de polymérisation. La fonction chimique Fc² peut être sous une forme protégée, comme par exemple dans le cas de la fonction amine primaire, amine secondaire ou thiol. A titre de fonction chimique Fc², peuvent être citées les fonctions éther, thioéther, amine primaire protégée, amine secondaire protégée, amine tertiaire, thiol protégé, silyle. De préférence, la fonction chimique Fc² est une fonction amine primaire protégée, une fonction amine secondaire protégée, une fonction amine tertiaire ou une fonction thiol protégée. Comme groupes protecteurs des fonctions amine primaire, amine secondaire et thiol, on peut citer les groupes silyles, par exemple les groupes triméthylsilyle et terbutyldiméthylsilyle.

Selon l'un quelconque des modes de réalisation de l'invention, g est de préférence différent de 0, ce qui implique que l'agent de fonctionnalisation comprend au moins une liaison Si-Rc².

A titre d'agent de fonctionnalisation, on peut citer les composés diméthoxydiméthylsilane, diéthoxydiméthylsilane, diméthoxydiéthylsilane, diéthoxydiéthylsilane, (N,N-diméthyl-3-aminopropyl)méthyldiméthoxysilane, (N,N-diméthyl-3-aminopropyl)méthyldiéthoxysilane, (N,N-diméthyl-3-aminopropyl)éthyldiméthoxysilane, (N,N-diméthyl-3-aminopropyl)éthyl-diéthoxysilane, 3-méthoxy-3,8,8,9,9-pentaméthyl-2-oxa-7-thia-3,8-disiladecane, triméthoxy-méthylsilane, triéthoxyméthylsilane, triméthoxyéthylsilane, triéthoxyéthylsilane, (N,N-diméthylaminopropyl)triméthoxysilane, le (N,N-diméthylaminopropyl)triéthoxysilane, (N-(3-triméthoxysilyl)propyl)-N-(triméthylsilyl)silanamine, (N-(3-triéthoxysilyl)propyl)-N-(triméthyl-silyl)silanamine et 3,3-diméthoxy-8,8,9,9-tétraméthyl-2-oxa-7-thia-3,8-disiladecane, de préférence diméthoxydiméthylsilane, diméthoxydiéthylsilane, (N,N-diméthyl-3-aminopropyl)méthyldiméthoxysilane, (N,N-diméthyl-3-aminopropyl)éthyldiméthoxysilane, 3-méthoxy-3,8,8,9,9-pentaméthyl-2-oxa-7-thia-3,8-disiladecanetriméthoxyméthylsilane, triméthoxyéthylsilane, (N,N-diméthylaminopropyl)triméthoxysilane, (N-(3-triméthoxysilyl)-propyl)-N-(triméthylsilyl)silanamine et 3,3-diméthoxy-8,8,9,9-tétraméthyl-2-oxa-7-thia-3,8-disiladecane, de manière plus préférentielle triméthoxyméthylsilane, triméthoxyéthylsilane, (N,N-diméthylaminopropyl)triméthoxysilane, (N-(3-triméthoxysilyl)propyl)-N-(triméthylsilyl)-silanamine et 3,3-diméthoxy-8,8,9,9-tétraméthyl-2-oxa-7-thia-3,8-disiladecane.

L'agent de fonctionnalisation est ajouté typiquement au milieu de polymérisation résultant de l'étape a). Il est typiquement ajouté au milieu de polymérisation à un taux de conversion des monomères choisi par l'homme du métier selon la macrostructure souhaitée du copolymère. L'étape a) étant conduite généralement sous pression d'éthylène, un dégazage du réacteur de polymérisation peut être réalisé avant l'ajout de l'agent de fonctionnalisation. L'agent de fonctionnalisation est ajouté dans des conditions inertes et anhydres au milieu de polymérisation, maintenu à la température de polymérisation. Il est typiquement utilisé de 0.25 à 10 moles d'agent de fonctionnalisation pour 1 mole de co-catalyseur, de préférence de 2 à 4 moles d'agent de fonctionnalisation pour 1 mole de co-catalyseur.

L'agent de fonctionnalisation est mis en contact avec le milieu de polymérisation pendant un temps suffisant pour permettre la réaction de fonctionnalisation. Ce temps de contact est choisi judicieusement par l'homme du métier en fonction de la concentration du milieu réactionnel et de la température du milieu réactionnel. Typiquement, la réaction de fonctionnalisation est conduite sous agitation, à une température allant de 17 à 80°C, pendant 0.01 à 24 heures.

Une fois fonctionnalisé, le copolymère peut être récupéré, notamment en l'isolant du milieu réactionnel. Les techniques pour séparer le copolymère du milieu réactionnel sont bien connues de l'homme du métier et choisies par l'homme du métier selon la quantité de copolymère à séparer, sa macrostructure et les outils mis à dispositions de l'homme du métier. Peuvent être cités par exemple les techniques de coagulation du copolymère dans un solvant tel que le méthanol, les techniques d'évaporation du solvant du milieu réactionnel et des monomères résiduels, par exemple sous pression réduite.

Lorsque l'agent de fonctionnalisation est de formule (II), (II-1) ou (II-2)et g est égal à 2, l'étape b) peut être suivie d'une réaction d'hydrolyse pour former un copolymère portant en extrémité de chaîne une fonction silanol. L'hydrolyse peut être conduite par une étape de stripping de la solution contenant le copolymère à l'issue de l'étape b), de manière connue par l'homme du métier.

Lorsque l'agent de fonctionnalisation est de formule (II), (II-1), (II-2), (II-3)ou (II-4), que g est différent de 0 et que Rc² représente une chaîne hydrocarbonée substituée par une fonction Fc² sous une forme protégée, l'étape b) peut être aussi suivie d'une réaction d'hydrolyse pour déprotéger la fonction en extrémité de la chaîne du copolymère. La réaction d'hydrolyse, étape de déprotection de la fonction, est généralement conduite en milieu acide ou basique selon la nature chimique de la fonction à déprotéger. Par exemple, un groupe silyle, en particulier triméthylsilyle ou terbutyldiméthylsilyle, qui protège une fonction amine ou thiol peut être hydrolysé en milieu acide ou basique de manière connue par l'homme du métier. Le choix des conditions de déprotection est fait judicieusement par l'homme du métier en tenant compte de la structure chimique du substrat à déprotéger.

L'étape c) est une étape optionnelle selon que l'on souhaite transformer ou non le groupe fonctionnel en fonction silanol ou que l'on souhaite déprotéger ou non la fonction protégée. Préférentiellement, l'étape c) est conduite avant de séparer le copolymère du milieu réactionnel à l'issue de l'étape b) ou bien simultanément à cette étape de séparation.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Méthodes de caractérisation :

### Chromatographie d'exclusion stérique (SEC) :

### a) Principe de la mesure:

La chromatographie d'exclusion stérique ou SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.
Associée à 3 détecteurs (3D), un réfractomètre, un viscosimètre et un détecteur de diffusion de la lumière à 90°, la SEC permet d'appréhender la distribution de masses molaires absolues d'un polymère. Les différentes masses molaires absolues moyennes en nombre (Mn), en poids (Mw) et la dispersité (*Ð* = Mw/Mn) peuvent également être calculées.

### b) Préparation du polymère:

Il n'y a pas de traitement particulier de l'échantillon de polymère avant analyse. Celui-ci est simplement solubilisé dans du tétrahydrofuranne (+ 1%vol. de diisopropylamine + 1%vol. de triéthylamine) à une concentration d'environ 1 g/L. Puis la solution est filtrée sur filtre de porosité 0.45µm avant injection.

### c) Analyse SEC3D:

L'appareillage utilisé est un chromatographe « WATERS Alliance ». Le solvant d'élution est du tétrahydrofuranne (+ 1%vol. de diisopropylamine + 1%vol. de triéthylamine), le débit de 0,5 mL/min, la température du système de 35°C. On utilise un jeu de quatre colonnes POLYMER LABORATORIES en série, de dénominations commerciales : deux « MIXED A LS » et deux « MIXED B LS ».
Le volume injecté de la solution de l'échantillon de polymère est 100 µL. Le système de détection utilisé est le « TDA 302 de VISCOTEK », il est composé d'un réfractomètre différentiel, d'un viscosimètre différentiel et d'un détecteur de diffusion de la lumière à 90°. Pour ces 3 détecteurs, la longueur d'onde est de 670 nm. Pour le calcul des masses molaires moyennes est intégrée la valeur de l'incrément d'indice de réfraction dn/dC de la solution de polymère, valeur préalablement définie dans du (tétrahydrofuranne + 1%vol. de diisopropylamine + 1%vol. de triéthylamine) à 35°C et 670nm. Le logiciel d'exploitation des données est le système « OMNISEC de VISCOTEK».

### Résonance magnétique nucléaire (RMN) :

Tous les produits de fonctionnalisation des copolymères de l'éthylène et du 1,3-butadiène sont caractérisés par spectrométrie RMN ¹H, ¹³C, ²⁹Si. Les spectres RMN sont enregistrés sur un Spectromètre Brüker Avance III 500 MHz équipé d'une cryo-sonde « large bande » BBIz-grad 5 mm. L'expérience RMN ¹H quantitative, utilise une séquence simple impulsion 30° et un délai de répétition de 5 secondes entre chaque acquisition. 64 à 256 accumulations sont réalisées. L'expérience RMN ¹³C quantitative, utilise une séquence simple impulsion 30° avec un découplage proton et un délai de répétition de 10 secondes entre chaque acquisition. 1024 à 10240 accumulations sont réalisées. La détermination de la microstructure des copolymères est définie dans la littérature, selon l'article de Llauro et al., Macromolecules 2001, 34, 6304-6311. Cette méthode a été complétée dans le cas spécifique de terpolymères possédant des motifs styrène, comme décrit ci-après.
Le spectre RMN ¹H permet de quantifier les unités styrène, 1,3-butadiène et éthylène. Le spectre de corrélation RMN 2D ¹H/¹³C 1J HSQC édité permet de vérifier la nature des motifs grâce aux déplacements chimiques des signaux des atomes de carbone et de proton. Des spectres de corrélation longue distance 3J HMBC ¹H/¹³C permettent de vérifier la présence de liaisons covalentes entre les unités styrène, 1,3-butadiène et l'éthylène. L'attribution des protons utilisés pour la quantification est reportée dans le tableau 1.

**Tableau 1 : Déplacements chimiques observés pour la quantification des échantillons. Les déplacements chimiques sont calibrés par rapport à l'impureté protonée du chloroforme (δppm ¹H à 7,20ppm et δppm ¹³C à 77,0ppm).**

| **Nombre de proton** | δ**ppm (¹H)** | **Unités quantifiés** |
|---|---|---|
| 5 | 6.5 à 8 | 5 H aromatiques de l'unité styrène |
| 1+2 | 4.96 à 5.60 | 1H éthylénique du PB1-2 + 2H éthyléniques du PB1-4 |
| 2 | 4.6 à 4.96 | 2H éthyléniques du PB1-2 |
| 4 | 0.2 - 3.0 | 4H de l'unité éthylène + 3H aliphatiques de l'unité styrène + 3H du PB1-2 + 4H du PB1-4 |

| | | |
|---|---|---|
| PB1-2 : unité du 1,3 butadiène résultant d'une insertion 2,1 (unité 1,2) PB1-4 : unité du 1,3 butadiène résultant d'une insertion 1,4 (unité 1,4) | | |

L'information de la microstructure en cis et trans des motifs PB1-4 peut être obtenue à partir du spectre RMN ¹D ¹³C quantitatif

Les expériences bidimensionnelles ¹H/¹³C et ¹H/²⁹Si sont utilisées dans le but de déterminer la structure des polymères fonctionnels.
La structure chimique finale de chaque polymère fonctionnel est identifiée par RMN (¹H, ¹³C et ²⁹Si).

### II.2-Préparation des copolymères conformes à l'invention :

### Matières premières

Tous les réactifs sont obtenus commercialement excepté les métallocènes [{Me₂SiFlu₂Nd(µ-BH₄)₂Li(THF)}_{2]} et [{Me₂SiCpFluNd(µ-BH₄)₂Li(THF)}₂], dénommés respectivement métallocènes 1 et 2 dans le tableau 2, (Cp et Flu désignant respectivement C₅H₄ et C₈H₁₃) qui peuvent être préparés selon les mode opératoires décrits dans les documents WO 2007054224 et WO 2007054223.

Le butyloctylmagnésium BOMAG (20% dans l'heptane, C = 0,88 mol L⁻¹) provient de Chemtura et est stocké dans un tube de Schlenk sous atmosphère inerte. L'éthylène, de qualité N35, provient de la société Air Liquide et est utilisé sans purification préalable. Le 1,3-butadiène est purifié sur gardes d'alumine. Les agents de fonctionnalisation sont utilisés sans purification préalable. le (N,N-diméthyl-3-aminopropyl)méthyldiméthoxysilane (AB252529), proviennent de chez ABCR et le (N,N-diméthylaminopropyl)triméthoxysilane provient de chez Nitrochemie.

Le solvant méthylcyclohexane provenant de chez BioSolve est séché et purifié sur colonne d'alumine dans une fontaine à solvant provenant de chez mBraun et utilisés en atmosphère inerte. Le méthanol (99%, classe 3, grade II) provient de la société Laurylas, , le C₆D₆ (99,6% atom D) de chez Aldrich et est stocké à froid. Toutes les réactions sont effectuées en atmosphère inerte.

### Equipement

Toutes les polymérisations et les réactions de fonctionnalisation de copolymères de l'éthylène et du 1,3-butadiène ou des terpolymères de l'éthylène, du 1,3-butadiène et du styrène sont effectuées dans un réacteur à cuve jetable en verre de 500 mL (flacons Schott) muni d'une pale d'agitation en acier inoxydable. Le contrôle de la température est assuré grâce à un bain d'huile thermostaté connecté à une double enveloppe en polycarbonate. Ce réacteur possède toutes les entrées ou sorties nécessaires aux manipulations.

### Mode opératoire de polymérisation

Une quantité variable de métallocène est introduite dans une première bouteille Steinie en boîte à gants (Tableau 2). Le butyloctylmagnésium mis au préalable en solution dans 300 mL de méthylcyclohexane dans une seconde bouteille Steinie est introduit dans la première bouteille Steinie contenant le métallocène dans les proportions indiquées dans le tableau 2.

Après 10 minutes de contact à température ambiante est obtenue une solution catalytique. La solution catalytique est ensuite introduite dans le réacteur de polymérisation.

Dans le cas du métallocène 1, [{Me₂SiFlu₂Nd(µ-BH₄)₂Li(THF)}₂], la température dans le réacteur est alors augmentée à 80°C. Lorsque cette température est atteinte, la réaction démarre par injection d'un mélange gazeux d'éthylène (Eth) et de 1,3-butadiène (But) (80/20 % molaire) dans le réacteur. La réaction de polymérisation se déroule à une pression de 4 bars sauf dans le cas de l'exemple 6 où elle se déroule à 8 bars.

Dans le cas du métallocène 2, [{Me₂SiCpFluNd(µ-BH₄)₂Li(THF)}₂], la température dans le réacteur est alors augmentée à 50°C. Lorsque cette température est atteinte, la réaction démarre par injection d'un mélange gazeux d'éthylène et de 1,3-butadiène dans le réacteur dans les proportion définies dans le tableau 2. La réaction de polymérisation se déroule à une pression de 4 bars.

Lors de la synthèse de terpolymère de l'éthylène, du 1,3-butadiène et du styrène avec ce métallocène, le styrène est injecté dans le réacteur de polymérisation juste après introduction de la solution catalytique.

### Mode opératoire de fonctionnalisation

Lorsque la conversion en monomères souhaitée est atteinte, le contenu du réacteur est dégazé puis l'agent de fonctionnalisation est introduit sous atmosphère inerte par surpression. Le milieu réactionnel est agité pendant un temps et une température indiqués dans le tableau 2. Après réaction, le milieu est dégazé puis précipité dans du méthanol. Les polymères sont remis en solution dans du toluène, puis précipité dans le méthanol de manière à éliminer les molécules « silane » non greffés, ce qui permet d'améliorer la qualité des signaux des spectres pour la quantification du taux de fonction et l'intégration des différents signaux. Le polymère est antioxydé puis séché à 60°C sous vide jusqu'à masse constante. Il est ensuite analysé par SEC (THF), RMN ¹H, ¹³C, ²⁹Si.

Les agents de fonctionnalisation utilisés sont respectivement :
- X1 : (N,N-dimethyl-3-aminopropyl)methyldimethoxysilane A1
- X2 : (N,N-dimethylaminopropyl)trimethoxysilane A2

Les conditions expérimentales de la réaction de fonctionnalisation sont décrites dans le tableau 2.

### II.3-Résultats :

Les résultats figurent dans le tableau 3.
Indépendamment de l'agent de fonctionnalisation et du métallocène utilisés, le copolymère présente en extrémité de chaîne une fonctionnalisation alcoxysilane ou silanol. Le tiers, voire la moitié des chaînes peuvent être fonctionnalisées, comme c'est le cas lorsque les agents de fonctionnalisation A1et A2 sont utilisés avec le métallocène 1. Dans le cas de l'utilisation du métallocène 2 en copolymérisation de l'éthylène et du butadiène avec les agents de fonctionnalisation A1et A2, les taux de fonctions peuvent atteindre plus de 90%. Avec ce même métallocène en terpolymérisation éthylène, butadiène et styrène, près de la moitié des chaines peuvent être fonctionnalisées avec l'agent de fonctionnalisation A1. Le procédé de synthèse, notamment par l'utilisation d'un agent de fonctionnalisation comme A1 ou A2, permet aussi la synthèse de polymères qui portent aussi une fonction amine.
Le résultat de fonctionnalisation est remarquable par le taux de fonctionnalisation, puisqu'il est atteint malgré les réactions de transfert de chaîne qui caractérisent la polymérisation mise en œuvre pour la synthèse des copolymères, y compris terpolymères.

Des compositions de caoutchouc, respectivement T et I, dont la formulation exprimée en pce (parties en poids pour cent partie d'élastomère) figure dans le tableau 4, ont été préparées selon le mode opératoire suivant : on introduit dans un mélangeur interne (taux de remplissage final : environ 70% en volume), dont la température initiale de cuve est d'environ 80°C, successivement le copolymère, la silice, ainsi que les divers autres ingrédients a l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et l'accélérateur sur un mélangeur (homo-finisseur) à 30 °C, en mélangeant le tout (phase productive) pendant une dizaine de minutes. Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques. Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation de 0,1% à 50% (cycle aller), puis de 50% à 0,1% (cycle retour). Les résultats exploités sont le module complexe de cisaillement G^{∗}, le facteur de perte tan(δ) et l'écart de module ΔG^{∗} entre les valeurs à 0,1 et 50% de déformation (effet Payne). Pour le cycle retour, on indique la valeur maximale de tan(δ) observée, noté tan(δ)max. Le module complexe G^{∗} à 50% de déformation, noté G^{∗}, l'écart de module ΔG^{∗} entre les valeurs 0,1 et 50% de déformation (effet Payne) et la valeur de tan(δ)max sont donnés en base 100, la valeur 100 étant attribuée à la composition témoin (T). Plus la valeur de ΔG^{∗} est faible, plus l'hystérèse de la composition de caoutchouc est faible. Plus la valeur de tan(δ)max est faible, plus l'hystérèse de la composition de caoutchouc est faible. Plus la valeur de G^{∗} est faible, plus la rigidité de la composition est faible.
On enregistre également la réponse d'un échantillon de composition soumis à une sollicitation sinusoïdale en cisaillement simple alterné lors d'un balayage en température, soumis à une sollicitation sinusoïdale à contrainte imposée de 0,7 MPa et à une fréquence de 10 Hz, la température allant de -60°C à 100°C, à raison une vitesse de 1,5°C par minute. La Tg du mélange est indiquée par la température du maximum de tan(δ), notée « Tg (°C) tan(δ) max ». Un autre résultat exploité est le module complexe de cisaillement dynamique (G^{∗}), noté Module G^{∗}, par exemple à 60°C. Pour plus de lisibilité les résultats de G^{∗} seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.
Pour la composition de caoutchouc qui contient le copolymère conforme à l'invention, on note une hystérèse plus faible ainsi qu'une plus faible rigidité

En résumé, le procédé conforme à l'invention permet d'accéder à des copolymères de 1,3-diène et d'oléfine, voire terpolymères qui sont fonctionnalisés alcoxysilane ou silanol en extrémité de chaîne.

**Tableau 2**

| Exemple | Métallocène | Métallocène (mol/L) | Co-catalyseur (mol/L) | Eth/Bde (%mol) | Styrène (mL) | Agent fonctionnalisation | Rapport Agent fonctionnalisation / co-catalyseur | Durée fonctionnalisation (min) | Température de polymérisation et de fonctionnalisation (°C) |
|---|---|---|---|---|---|---|---|---|---|
| 1 | 1 | 0.00015 | 0.00075 | 80/20 | - | A1 | 2 | 15 | 80 |
| 2 | 1 | 0.00016 | 0.00081 | 80/20 | - | A2 | 4 | 60 | 80 |
| 3 | 2 | 0.00026 | 0.00094 | 80/20 | - | A1 | 4 | 60 | 50 |
| 4 | 2 | 0.00019 | 0.0011 | 80/20 | - | A2 | 4 | 60 | 50 |
| 5 | 2 | 0.00019 | 0.0011 | 90/10 | 20 | A1 | 4 | 60 | 40 |
| 6 | 1 | 0.00007 | 0.0004 | 80/20 | - | A1 | 4 | 15 | 80 |

**Tableau 3**

| Exemple | Mn (g/mol) | Ethylène (% mol) | Butadiène 1,2 (% mol) | Butadiène 1,4 (% mol) | 1,2 cyclohexanediyle (% mol) | Styrène (% mol) | Taux de fonction (%) |
|---|---|---|---|---|---|---|---|
| 1 | 30100 | 76.7 | 6 | 5.4 | 11.9 | - | 33 |
| 2 | 41800 | 78 | 6 | 5 | 11 | - | 48 |
| 3 | 11265 | 56.8 | 1 | 42 | 0.2 | - | 98 |
| 4 | 16150 | 69 | 1 | 30 | 0 | - | 90 |
| 5 | 28160 | 62.5 | 0.5 | 10 | 0 | 27 | 44 |
| 6 | 139400 | 76.7 | 9 | 5.6 | 8.7 | - | 35 |

**Tableau 4**

| Composition (pce) | T | I |
|---|---|---|
| EBR (1) | 100 | - |
| EBR (2) | - | 100 |
| Antioxydant (3) | 2 | 2 |
| Acide stéarique | 2 | 2 |
| ZnO | 1 | 1 |
| Accélérateur (4) | 2 | 2 |
| Soufre | 1 | 1 |
| N234 | 3 | 3 |
| Silice (5) | 55 | 55 |
| Cire anti-ozone | 1.6 | 1.6 |
| Silane (6) | 4 | 4 |
| DPG (7) | 1.5 | 1.5 |
| Propriétés à cuit | | |
| ΔG^{∗} 23°C | 100 | 51 |
| Tanδ max 23°C | 100 | 82 |
| G^{∗} 23°C | 100 | 79 |
| Module G^{∗} | 100 | 88 |

| | | |
|---|---|---|
| (1) Copolymère d'éthylène et de 1,3-butadiène à 79% en mole d'unité éthylène et 7% en mole d'unité 1,2-cyclohexanediyle (non fonctionnel) (2) Copolymère d'éthylène et de 1,3-butadiène à 77% en mole d'unité éthylène et 9% en mole d'unité 1,2-cyclohexanediyle fonctionnalisé en extrémité de chaîne, taux de fonction 35%, agent de fonctionnalisation N,N-diméthyl-3-aminopropyl)méthyldiméthoxysilane (3) N-(1,3-diméthylbutyl)-N'-phényl-p-phenylènediamine ("Santoflex 6-PPD" société Flexsys) (4) N-cyclohexyl-2-benzothiazol-sulfénamide (« Santocure CBS » de la société Flexsys) (5) "Zeosil 1165 MP" société Solvay-Rhodia sous forme de microperles (6) TESPT ("Si69" société Evonik-Degussa (7) Diphénylguanidine | | |

## Revendications

1. Copolymère d'un 1,3-diène et d'une oléfine choisie dans le groupe constitué par les α-monooléfines, l'éthylène et leurs mélanges, lequel copolymère porte en une de ses extrémités de chaîne une fonction alcoxysilyle ou silanol, groupe fonctionnel F¹ , à condition que le copolymère soit différent d'un copolymère d'un 1,3-diène et d'un monomère vinylaromatique.

2. Copolymère selon la revendication 1 dans lequel le groupe fonctionnel F¹ est de formule (II-a)ou de formule (II-b)
Si(OR¹)_{3-f}(R²)_{f} (II-a)
Si(OH)(R²)₂, (II-b)
dans lesquelles :
les symboles R¹, identiques ou différents, représentent un alkyle,
les symboles R², identiques ou différents, représentent un atome d'hydrogène, une chaîne hydrocarbonée ou une chaîne hydrocarbonée substituée par une fonction chimique F²,
f est un nombre entier allant de 0 à 2.

3. Copolymère selon la revendication 2 dans lequel les symboles R¹ représentent un alkyle ayant au plus 6 atomes de carbone et les symboles R² représentent un alkyle ayant au plus 6 atomes de carbone ou une chaîne alcanediyle ayant au plus 6 atomes de carbone et substituée par une fonction chimique F².

4. Copolymère selon l'une quelconque des revendications 2 à 3 dans lequel la fonction chimique F² est une fonction amine primaire, secondaire, tertiaire ou une fonction thiol, la fonction amine primaire, secondaire ou thiol étant protégée par un groupe protecteur ou non protégée.

5. Copolymère selon l'une quelconque des revendications 2 à 4 dans lequel le groupe fonctionnel F¹ est de formule (II-a)dans laquelle f est égal à 1.

6. Copolymère selon l'une quelconque des revendications 1 à 5 dans lequel le 1,3-diène est le 1,3-butadiène, l'isoprène ou leur mélange, de préférence le 1,3-butadiène.

7. Copolymère selon l'une quelconque des revendications 1 à 6 dans lequel l'oléfine est l'éthylène ou un mélange d'éthylène et d'une α-monooléfine.

8. Copolymère selon l'une quelconque des revendications 1 à 7 dans lequel les unités 1,3-diène représentent au moins 35% en mole des unités monomères du copolymère.

9. Copolymère selon l'une quelconque des revendications 1 à 8 dans lequel les unités éthylène représentent plus de 50%, préférentiellement plus de 65% en mole des unités monomères du copolymère.

10. Procédé pour préparer un copolymère défini selon l'une quelconque des revendications 1 à 9,
lequel procédé comprend les étapes suivantes :
a) la copolymérisation d'un mélange monomère contenant le 1,3-diène et l'oléfine en présence d'un système catalytique comprenant un organomagnésien et un catalyseur métallocène comportant le motif de formule (I-1) ou (I-2)
P(Cp¹)(Cp²)Met (I-1)
(Cp¹)(Cp²)Met (I-2)
Met étant un atome de métal du groupe 4 ou un atome de métal de terre rare,
P étant un groupe pontant les deux groupes Cp¹ et Cp², et comprenant au moins un atome de silicium ou de carbone,
Cp¹ et Cp², identiques ou différents, étant choisis dans le groupe constitué par les groupes cyclopentadiényles, les groupes indényles et les groupes fluorényles, les groupes pouvant être substitués ou non,
b) la réaction d'un agent de fonctionnalisation, composé de formule (II), avec le copolymère obtenu à l'étape a),
Si(Fc¹)_{4-g} (Rc²)_{g} (II)
les symboles Fc¹, identiques ou différents, représentant un groupe alcoxy ou un halogène,
les symboles Rc², identiques ou différents, représentant un atome d'hydrogène, une chaîne hydrocarbonée ou une chaîne hydrocarbonée substituée par une fonction chimique Fc²,
g étant un nombre entier allant de 0 à 2,
c) le cas échéant une réaction d'hydrolyse.

11. Procédé selon la revendication 10 dans lequel le métallocène est de formule (I-1a) ou (I-2a)
{P(Cp¹)(Cp²)Met-G}_{b} (I-1a)
(Cp¹)(Cp²)MetG (I-2a)
dans lesquelles
• Cp¹, Cp² et P sont définis selon la revendication 10,
• Met représente un atome de métal de terre rare,
• le symbole G désignant un halogène X choisi dans le groupe constitué par le chlore, le fluor, le brome et l'iode, ou un groupe comprenant le motif borohydrure BH₄,
• b est égal à 1 ou 2.

12. Procédé selon la revendication 11 dans lequel le symbole G désigne le chlore ou le groupe de formule (III)
(BH₄)_{(1+c)-}L_{c}Nₓ (III)
dans laquelle
• L représente un métal alcalin choisi dans le groupe constitué par le lithium, le sodium et le potassium
• N représente une molécule d'un éther,
• x, nombre entier ou non, est égal ou supérieur à 0,
• c, nombre entier, est égal ou supérieur à 0.

13. Procédé selon l'une quelconque des revendications 10 à 12 dans lequel le symbole Met représente un atome de néodyme.

14. Procédé selon l'une quelconque des revendications 10 à 13 dans lequel P désigne le groupe SiMe₂.

15. Procédé selon l'une quelconque des revendications 10 à 14 dans lequel Cp¹ représente un groupe cyclopentadiényle substitué ou non susbstitué et Cp² représente un groupe fluorényle substitué ou non substitué, de préférence Cp¹ représente un groupe cyclopentadiényle non substitué et Cp² représente un groupe fluorényle non substitué.

16. Procédé selon l'une quelconque des revendications 10 à 15 dans lequel le groupe alcoxy est un méthoxy ou un éthoxy, de préférence un méthoxy.

## Patentansprüche

1. Copolymer aus einem 1,3-Dien und einem Olefin aus der Gruppe bestehend aus α-Monoolefinen, Ethylen und Mischungen davon, wobei das Copolymer an einem seiner Kettenenden eine Alkoxysilyl- oder Silanolfunktion, funktionelle Gruppe F¹, trägt, mit der Maßgabe, dass das Copolymer von einem Copolymer aus einem 1,3-Dien und einem vinylaromatischen Monomer verschieden ist.

2. Copolymer nach Anspruch 1, wobei die funktionelle Gruppe F¹ die Formel (II-a) oder Formel (II-b) aufweist:
Si (OR¹) _{3-f} (R²) _{f} (II-a)
Si (OH) (R²)₂ (II-b),
in denen:
die Symbole R¹ gleich oder verschieden sind und für ein Alkyl stehen,
die Symbole R² gleich oder verschieden sind und für ein Wasserstoffatom, eine Kohlenwasserstoffkette oder eine durch eine chemische Funktion F² substituierte Kohlenwasserstoffkette stehen,
f eine ganze Zahl im Bereich von 0 bis 2 ist.

3. Copolymer nach Anspruch 2, wobei die Symbole R¹ für ein Alkyl mit höchstens 6 Kohlenstoffatomen stehen und die Symbole R² für ein Alkyl mit höchstens 6 Kohlenstoffatomen oder eine durch eine chemische Funktion F² substituierte Alkandiylkette mit höchstens 6 Kohlenstoffatomen steht.

4. Copolymer nach einem der Ansprüche 2 bis 3, wobei es sich bei der chemischen Funktion F² um eine primäre, sekundäre oder tertiäre Aminfunktion oder eine Thiolfunktion handelt, wobei die primäre oder sekundäre Amin- oder Thiolfunktion durch eine Schutzgruppe geschützt oder ungeschützt ist.

5. Copolymer nach einem der Ansprüche 2 bis 4, wobei die funktionelle Gruppe F¹ die Formel (II-a) aufweist, in der f gleich 1 ist.

6. Copolymer nach einem der Ansprüche 1 bis 5, wobei es sich bei dem 1,3-Dien um 1,3-Butadien, Isopren oder eine Mischung davon, vorzugsweise 1,3-Butadien, handelt.

7. Copolymer nach einem der Ansprüche 1 bis 6, wobei es sich bei dem Olefin um Ethylen oder eine Mischung von Ethylen und einem α-Monoolefin handelt.

8. Copolymer nach einem der Ansprüche 1 bis 7, wobei die 1,3-Dieneinheiten mindestens 35 Mol-% der Monomereinheiten des Copolymers ausmachen.

9. Copolymer nach einem der Ansprüche 1 bis 8, wobei die Ethyleneinheiten mehr als 50 Mol-%, vorzugsweise mehr als 65 mol-%, der Monomereinheiten des Copolymers ausmachen.

10. Verfahren zur Herstellung eines Copolymers gemäß einem der Ansprüche 1 bis 9,
wobei das Verfahren die folgenden Schritte umfasst:
a) die Copolymerisation einer Monomermischung, die das 1,3-Dien und das Olefin enthält, in Gegenwart eines katalytischen Systems, umfassend eine Organomagnesiumverbindung und einen Metallocenkatalysator mit der Einheit der Formel (I-1) oder (I-2)
P (Cp¹) (Cp²)Met (I-1)
(Cp¹) (Cp²)Met (I-2),
wobei
Met ein Metallatom der Gruppe 4 oder ein Seltenerdmetallatom ist,
P eine die beiden Gruppen Cp¹ und Cp² verbrückende Gruppe mit mindestens einem Silicium- oder Kohlenstoffatom ist,
Cp¹ und Cp² gleich oder verschieden sind und aus der Gruppe bestehend aus Cyclopentadienylgruppen, Indenylgruppen und Fluorenylgruppen ausgewählt sind, wobei die Gruppen substituiert oder unsubstituiert sein können,
b) die Umsetzung eines Funktionalisierungsmittels, einer Verbindung der Formel (II), mit dem in Schritt a) erhaltenen Copolymer,
Si(Fc¹)_{4-g}(Rc²)_{g} (II),
wobei
die Symbole Fc¹ gleich oder verschieden sind und für eine Alkoxygruppe oder ein Halogen stehen,
die Symbole Rc² gleich oder verschieden sind und für ein Wasserstoffatom, eine Kohlenwasserstoffkette oder eine durch eine chemische Funktion Fc² substituierte Kohlenwasserstoffkette stehen,
g eine ganze Zahl im Bereich von 0 bis 2 ist,
c) gegebenenfalls eine Hydrolysereaktion.

11. Verfahren nach Anspruch 10, wobei das Metallocen der Formel (I-1a) oder (I-2a) entspricht:
{P (Cp¹) (Cp²)Met-G}_{b} (I-1a)
(Cp¹) (Cp²)Met-G (I-2a),
in denen
• Cp¹, Cp² und P gemäß Anspruch 10 definiert sind,
• Met für ein Seltenerdmetallatom steht,
• das Symbol G ein Halogen X aus der Gruppe bestehend aus Chlor, Fluor, Brom und Iod oder eine Gruppe mit der Borhydrideinheit BH₄ bedeutet,
• b gleich 1 oder 2 ist.

12. Verfahren nach Anspruch 11, wobei das Symbol G Chlor oder die Gruppe der Formel (III)
(BH₄) _{(1+c)}L_{c}-Nₓ (III)
in der
• L für ein Alkalimetall aus der Gruppe bestehend aus Lithium, Natrium und Kalium steht,
• N für ein Molekül eines Ethers steht,
• x ganzzahlig oder nicht ganzzahlig ist und gleich oder größer als 0 ist,
• c ganzzahlig ist und gleich oder größer als 0 ist,
bedeutet.

13. Verfahren nach einem der Ansprüche 10 bis 12, wobei das Symbol Met für ein Neodymatom steht.

14. Verfahren nach einem der Ansprüche 10 bis 13, wobei P die Gruppe SiMe₂ bedeutet.

15. Verfahren nach einem der Ansprüche 10 bis 14, wobei Cp¹ für eine substituierte oder unsubstituierte Cyclopentadienylgruppe steht und Cp² für eine substituierte oder unsubstituierte Fluorenylgruppe steht, vorzugsweise Cp¹ für eine unsubstituierte Cyclopentadienylgruppe steht und Cp² für eine unsubstituierte Fluorenylgruppe steht.

16. Verfahren nach einem der Ansprüche 10 bis 15, wobei es sich bei der Alkoxygruppe um ein Methoxy oder ein Ethoxy, vorzugsweise ein Methoxy, handelt.

## Claims

1. Copolymer of a 1,3-diene and of an olefin selected from the group consisting of α-monoolefins, ethylene and mixtures thereof, which copolymer bears, at one of its chain ends, an alkoxysilyl or silanol function, functional group F¹, provided that the copolymer is different from a copolymer of a 1,3-diene and a vinylaromatic monomer.

2. Copolymer according to Claim 1, in which the functional group F¹ is of formula (II-a) or formula (II-b):
Si(OR¹)_{3-f}(R²)_{f} (II-a)
Si(OH)(R²)₂, (II-b)
in which:
the R¹ symbols, which are identical or different, represent an alkyl,
the R² symbols, which are identical or different, represent a hydrogen atom, a hydrocarbon chain or a hydrocarbon chain substituted by a chemical function F²,
f is an integer ranging from 0 to 2.

3. Copolymer according to Claim 2, in which the R¹ symbols represent an alkyl having at most 6 carbon atoms and the R² symbols represent an alkyl having at most 6 carbon atoms or an alkanediyl chain having at most 6 carbon atoms and substituted by a chemical function F².

4. Copolymer according to any one of Claims 2 to 3, in which the chemical function F² is a primary, secondary or tertiary amine function or a thiol function, the primary or secondary amine or thiol function being protected by a protecting group or being unprotected.

5. Copolymer according to any one of Claims 2 to 4, in which the functional group F¹ is of formula (II-a) in which f is equal to 1.

6. Copolymer according to any one of Claims 1 to 5, in which the 1,3-diene is 1,3-butadiene, isoprene or a mixture thereof, preferably 1,3-butadiene.

7. Copolymer according to any one of Claims 1 to 6, in which the olefin is ethylene or a mixture of ethylene and an α-monoolefin.

8. Copolymer according to any one of Claims 1 to 7, in which the 1,3-diene units represent at least 35 mol% of the monomer units of the copolymer.

9. Copolymer according to any one of Claims 1 to 8, in which the ethylene units represent more than 50 mol%, preferentially more than 65 mol% of the monomer units of the copolymer.

10. Process for preparing a copolymer defined according to any one of Claims 1 to 9, which process comprises the following steps:
a) the copolymerization of a monomer mixture containing the 1,3-diene and the olefin in the presence of a catalytic system comprising an organomagnesium compound and a metallocene catalyst comprising the moiety of formula (1-1) or (1-2)
P(Cp¹)(Cp²)Met (1-1)
(Cp¹)(Cp²)Met (1-2)
Met being a group 4 metal atom or a rare-earth metal atom,
P being a group that bridges the two groups Cp¹ and Cp², and that comprises at least one silicon or carbon atom,
Cp¹ and Cp², which are identical or different, being selected from the group consisting of cyclopentadienyl groups, indenyl groups and fluorenyl groups, it being possible for the groups to be substituted or unsubstituted,
b) the reaction of a functionalizing agent, a compound of formula (II), with the copolymer obtained in step a),
Si(Fc¹)_{4-g} (RC²)_{g} (II)
the Fc¹ symbols, which are identical or different, representing an alkoxy group or a halogen,
the Rc² symbols, which are identical or different, representing a hydrogen atom, a hydrocarbon chain or a hydrocarbon chain substituted by a chemical function Fc²,
g being an integer ranging from 0 to 2,
c) if necessary, a hydrolysis reaction.

11. Process according to Claim 10, in which the metallocene is of formula (I-1a) or (I-2a)
{P(Cp¹)(Cp²)Met-G}_{b} (I-1a)
(Cp¹)(Cp²)MetG (I-2a)
in which
• Cp¹, Cp² and P are defined according to Claim 10,
• Met represents a rare-earth metal atom,
• the G symbol denoting a halogen X selected from the group consisting of chlorine, fluorine, bromine and iodine, or a group comprising the borohydride moiety BH₄,
• b is equal to 1 or 2.

12. Process according to Claim 11, in which the G symbol denotes chlorine or the group of formula (III)
(BH₄)_{(1+c)-}L_{c}-Nₓ (III)
in which
• L represents an alkali metal selected from the group consisting of lithium, sodium and potassium,
• N represents a molecule of an ether,
• x, which may or may not be an integer, is equal to or greater than 0,
• c, an integer, is equal to or greater than 0.

13. Process according to any one of Claims 10 to 12, in which the Met symbol represents a neodymium atom.

14. Process according to any one of Claims 10 to 13, in which P denotes the SiMe₂ group.

15. Process according to any one of Claims 10 to 14, in which Cp¹ represents a substituted or unsubstituted cyclopentadienyl group and Cp² represents a substituted or unsubstituted fluorenyl group, preferably Cp¹ represents an unsubstituted cyclopentadienyl group and Cp² represents an unsubstituted fluorenyl group.

16. Process according to any one of Claims 10 to 15, in which the alkoxy group is a methoxy or an ethoxy, preferably a methoxy.
